# EUROPEAN PATENT SPECIFICATION

(11) **EP 3 208 249 B1**
(45) Date of publication and mention of the grant of the patent: **24.10.2018**
(21) Application number: 16290035.1
(22) Date of filing: 18.02.2016
(51) Int. Cl.: C04B 28/04, C09K 8/42, C09K 8/473, C09K 8/487, C04B 103/46

(54) **WELL CEMENTING COMPOSITIONS AND METHODS**
ZUSAMMENSETZUNGEN UND VERFAHREN ZUR BOHRLOCHZEMENTIERUNG
COMPOSITIONS ET PROCÉDÉS POUR LA CIMENTATION DE PUITS

(43) Date of publication of application: 23.08.2017
(73) Proprietor: Services Pétroliers Schlumberger, 75007 Paris (FR); Schlumberger Technology B.V., 2514 JG The Hague (NL)
(72) Inventor: Catheline, Sebastien, 92140 Clamart (FR); Michaux, Michel, 92140 Clamart (FR)
(74) Representative: Schlumberger Intellectual Property Department

(56) References cited:
- EP-A1- 2 055 686
- WO-A1-2015/191050
- US-A- 5 594 050
- US-A1- 2009 149 354
- US-B1- 6 739 806
- US-B1- 6 832 652

## Description

### BACKGROUND

This disclosure relates to cement compositions and methods for cementing a subterranean well.

During the construction of subterranean wells, it is common, during and after drilling, to place a tubular body in the wellbore. The tubular body may comprise drillpipe, casing, liner, coiled tubing or combinations thereof. The purpose of the tubular body is to act as a conduit through which desirable fluids from the well may travel and be collected. The tubular body is normally secured in the well by a cement sheath.

The cement sheath is usually placed in the annular region between the outside of the tubular body and the subterranean borehole wall by pumping the cement slurry down the interior of the tubular body, which in turn exits the bottom of the tubular body and travels up into annulus. The cement slurry may also be placed by the "reverse cementing" method, whereby the slurry is pumped directly down into the annular space.

The cement sheath provides mechanical support and hydraulic isolation between the zones or layers that the well penetrates. The latter function is important because it prevents hydraulic communication between zones that may result in contamination. For example, the cement sheath blocks fluids from oil or gas zones from entering the water table and contacting drinking water. In addition, to optimize a well's production efficiency, it may be desirable to isolate, for example, a gas-producing zone from an oil-producing zone. The cement sheath achieves hydraulic isolation because of its low permeability. In addition, intimate bonding between the cement sheath and both the tubular body and borehole is necessary to prevent leaks.

In the course of completing oil and gas wells and the like, various types of fluids are circulated in the wellbore. These fluids include, but are not limited to, drilling fluids, spacer fluids, cement slurries and gravel-packing fluids. In addition, these fluids typically contain solid particles. Fluid hydrostatic pressure and pumping pressure create a pressure differential between the wellbore and the surrounding formation rock. As a result, the liquid portion of the fluid has a tendency to enter pores in the subterranean rock, migrate away from the wellbore, and leave the solid particles behind. In other words, a filtration process occurs that is commonly known in the art as "fluid loss."

Excessive fluid loss may have undesirable consequences. For example, as more and more liquid exits the wellbore and penetrates the subterranean rock, the solids left behind may concentrate and form a plug, preventing further fluid flow in the wellbore and terminating the completion process prematurely. Liquid entering the formation rock may interact with minerals such as clays, causing the rock to lose permeability-a condition known in the art as "formation damage." The rheological and chemical properties of a completion-fluid system may also be sensitive to the ratio between the liquid and solid ingredients. Disruption of the optimal liquid-solid ratio arising from fluid loss may have a detrimental effect on the completion process and cause failure.

Control of fluid loss is particularly important during primary and remedial well-cementing operations. The goal of primary cementing is to pump a cement slurry in the well and fill the annular space between a casing string and the subterranean rock. The slurry may be pumped down through the casing interior and up the annulus, or vice versa. When the cement slurry hardens, it supports the casing in the well and provides a hydraulic seal between formation strata. Fluid-loss control during primary cementing is necessary to control the rheological properties of the cement slurry, to ensure that chemical reactions in the slurry proceed properly, and to obtain a durable hardened cement that will provide hydraulic isolation throughout the life of the well.

Remedial cementing consists of two main procedures-plug cementing and squeeze cementing. Fluid-loss control is particularly pertinent to squeeze cementing. Squeeze cementing is a process for restoring hydraulic isolation. A cement slurry is pumped downhole to seal casing leaks or voids behind the casing that have allowed hydraulic communication between formation strata. Squeeze cementing involves injecting a cement slurry into strategic locations that are often very small. Fluid-loss control is necessary to avoid premature solids bridging, and to ensure that the cement slurry arrives and hardens at the correct location.

Fluid loss during cementing operations may be minimized by adding "fluid-loss additives" to cement slurries. Such additives include water soluble polymers (e.g., hydroxyethylcellulose, 2-acrylamido-2-methylpropane sulfonic acid (AMPS)/acrylamide copolymer, sulfonated polystyrene, etc.), latexes (e.g., styrene-butadiene latex) and particulate materials (e.g., bentonite). A thorough discussion of fluid-loss additives and fluid-loss control may be found in the following publications. Nelson EB, Michaux M and Drochon B: "Cement Additives and Mechanisms of Action," in Nelson EB and Guillot D: Well Cementing-2nd Edition, Houston: Schlumberger (2006): 49-90. Daccord G, Craster B, Ladva H, Jones TGJ and Manescu G: "Cement-Formation Interactions," in Nelson EB and Guillot D: Well Cementing-2nd Edition, Houston: Schlumberger (2006) 191-232.

Another effective fluid-loss additive is a crosslinked polyvinylalcohol (PVOH) microgel. Document US5,594,050 discloses the use of chemically crosslinked polyvinyl alcohol as fluid loss control agent in cement slurries. The PVOH microgel provides effective fluid-loss control at temperatures up to about 121°C (250°F), does not significantly retard cement hydration and is compatible with hydration accelerators such as calcium chloride. Thus, it may be suitable for low-temperature applications. However, the crosslinked PVOH microgels are sensitive to the presence of boron in the cement slurry, which may inhibit the ability of the microgels to provide fluid-loss control. The boron may be present in the cement as a trace impurity, and borates may be used as retarder aids. However, the boron is particularly troublesome when borosilicate glass beads are present to reduce the slurry density. Doccument US6,832,652 B discloses the use of borosilicate glass microspheres as lightweight additive in cementitious slurries for cementing oil wells.

### SUMMARY

The present disclosure describes compositions and methods for well cementing in which the sensitivity of crosslinked PVOH microgels to boron is reduced.

In an aspect, embodiments relate to compositions. The compositions comprise water, portland cement, a linear polyvinylalcohol and a crosslinked polyvinylalcohol, said composition further comprising borosilicate glass microspheres.

In a further aspect, embodiments relate to methods for cementing a subterreanean well. A cement slurry is prepared that comprises water, portland cement, a linear polyvinylalcohol, a crosslinked polyvinylalcohol, said slurry further comprising borosilicate glass microspheres, and the linear polyvinylalcohol is crosslinked by boron in the slurry. The slurry is then placed into the well.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Fig. 1 depicts the crosslinking of polyvinylalcohol with borate ion.
Fig. 2 is a plot showing the fluid loss control effect of adding linear polyvinylalcohol to cement slurries containing borosilicate glass beads and crosslinked polyvinylalcohol microgel.

### DETAILED DESCRIPTION

In the following description, numerous details are set forth to provide an understanding of the present disclosure. However, it may be understood by those skilled in the art that the methods of the present disclosure may be practiced without these details and that numerous variations or modifications from the described embodiments may be possible.

At the outset, it should be noted that in the development of any such actual embodiment, numerous implementation-specific decisions are made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited.

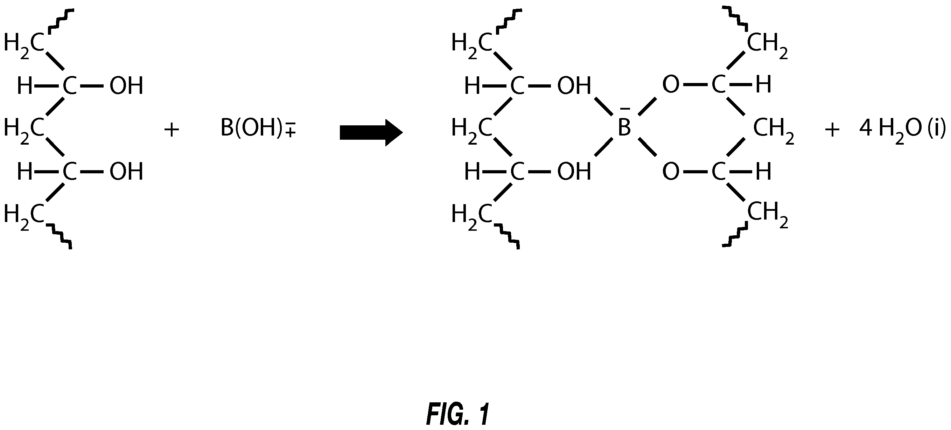

A portland cement slurry comprises both a linear (i.e., non crosslinked) PVOH and a crosslinked PVOH microgel. The linear PVOH preferentially crosslinks with any boron that is present in a portland cement slurry (Fig. 1). As a result, the crosslinked PVOH microgel is unaffected and may continue to provide fluid-loss control in the slurry composition that employs borosilicate glass microspheres as extenders to lower the slurry density.

For all aspects, the water may be fresh water, connate water, produced water, sea water or brines.

For all aspects, the borosilicate glass microspheres may be present at concentrations such that the slurry density is between 1080 and 1680 kg/m³ (9.0 and 14.0 lbm/gal).

For all aspects, the linear PVOH may have a molecular weight between 30,000 g/mol and 200,000 g/mol. The molecular weight may be between 30,000 and 200,000 g/mol.

For all aspects, the linear PVOH may be present at a concentration between 1 kg/tonne and 6 kg/tonne. The crosslinked PVOH may be present at a concentration between 1 kg/tonne and 6 kg/tonne.

For all aspects, the linear PVOH and the crosslinked PVOH may have a degree of hydrolysis between 86% and 90%. PVOH within this hydrolysis range is known in the art as "partially hydrolyzed."

For all aspects, the cement slurry may further comprise accelerators, retarders, extenders, weighting agents, dispersants, lost circulation additives, antifoam agents, or gas generating agents, or combinations thereof.

The foregoing is further illustrated by reference to the following examples, which are presented for purposes of illustration and are not intended to limit the scope of the present disclosure.

### EXAMPLES

Cement slurries were prepared and tested according to the recommended practice specified by the American Petroleum Institute (RP 10B). The cement was Dyckerhoff Class G, and base slurries were prepared at a density of 1198 kg/m³ (10.0 lbm/gal) or 1438 kg/m³ (12.0 lbm/gal). Tap water was the mixing fluid.

Borosilicate glass microspheres (available from Shanghai Schlights International Co.) were added either raw (unwashed) or washed form. Prewashing the microspheres in water removes most of the boron that would enter the aqueous phase of the cement slurry.

A linear 4 wt% PVOH solution was added at various concentrations. The linear PVOH has a grade of 4-88, meaning a viscosity of 4 mPa.s when dissolved in an aqueous solution at 4 wt%. The degree of hydrolysis of the PVOH was 88%.

A crosslinked PVOH microgel additive was also added at various concentrations. The microgel additive is available from Solvay.

The cement slurries were mixed in a Waring blender for 5 minutes at 4,000 RPM. Mixing at the low RPM is standard practice to prevent rupturing the microspheres. Rheological and fluid-loss measurements were performed at 30°C. A Chan 35 rheometer (available from Chandler Engineering, Tulsa, OK) was used with a R1B1 rotor and bob configuration. Fluid-loss measurements were performed at 6.9 MPa (1000 psi) differential pressure.

### EXAMPLE 1

A series of slurries was tested with various amounts of linear PVOH solutions. The slurry compositions are listed in Table 1. The slurry density was 1438 kg/m³ and the solid volume fraction (SVF) was 55%.

**Table 1. Slurry compositions of 1438 kg/m³ slurries. BVOB = by volume of solid blend; BWOB = by weight of solid blend; L/tonne of blend**

| **Test number** | **1** | **2** | **3** | **4** |
|---|---|---|---|---|
| **DRY BLEND** | | | | |
| Class G cement (BVOB) | 40 | 40 | 40 | 40 |
| Glass beads (BVOB) | 50 | 50 | 50 | 50 |
| Fine silica (BVOB) | 10 | 10 | 10 | 10 |

| **WET PHASE** | | | | |
|---|---|---|---|---|
| Crosslinked PVOH microgel (L/tonne) | 77 | 77 | 77 | 77 |
| Polycarboxylate dispersant (L/tonne) | 6.5 | 6.5 | 6.5 | 6.5 |
| Antisettling agent (BWOB) | 0.4 | 0.4 | 0.4 | 0.4 |
| Polyglycol antifoam agent (L/tonne) | 3.2 | 3.2 | 3.2 | 3.2 |
| Linear PVOH (4%) (L/tonne) | **0** | **36** | **72** | **107** |
| Tap water (L/tonne) | 373.1 | 335 | 301.4 | 263.7 |

The rheological and fluid loss measurements are given in Table 2.

**Table 2. Rheological and fluid loss measurements of 1438 kg/m³ slurries.**

| **Example** | **Test number** | **1** | **2** | **3** | **4** |
|---|---|---|---|---|---|
| 1A | Plastic viscosity (mPa.s) | 218 | 216 | 227 | 310 |
| 1B | Yield Value (Pa) | 4.8 | 3.3 | 4.2 | 8.1 |
| 1C | API Fluid-loss (mL) | 274 | 76 | 40 | 35 |

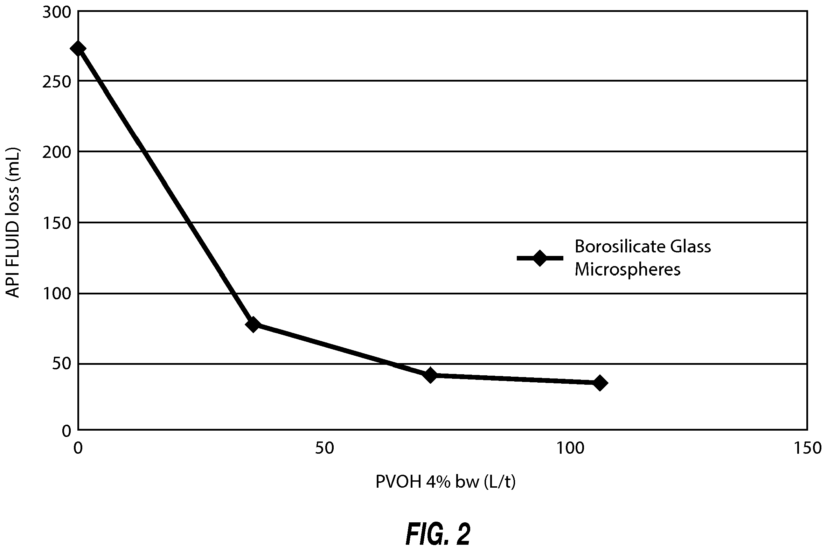

These results show that in presence of borosilicate glass, the crosslinked PVOH microgels alone were not able to provide good fluid-loss control (Test 1). Test 1 is comparative. "Good" fluid loss control is generally considered to be an API fluid-loss value lower than 100 mL. The addition of linear low molecular-weight PVOH established fluid-loss control in presence of boron (Tests 2, 3 and 4). The results are shown graphically in Fig. 2.

### EXAMPLE 2

A series of slurries was tested with various amounts of linear PVOH solutions. The slurry compositions are listed in Table 3. The slurry density was 1198 kg/m³ and the solid volume fraction (SVF) was 55%.

**Table 3. Slurry compositions of 1198 kg/m³ slurries. BVOB = by volume of solid blend; BWOB = by weight of solid blend; L/tonne = liters per tonne of blend.**

| **Test number** | **6** | **7** |
|---|---|---|
| **DRY BLEND** | | |
| Class G cement (BVOB) | 25.2 | 25.2 |
| Glass beads (BVOB) | 64.8 | 64.8 |
| Fine silica (BVOB) | 10 | 10 |

| **WET PHASE** | | |
|---|---|---|
| Crosslinked PVOH microgel (L/tonne) | 102.6 | 102.6 |
| Polycarboxylate dispersant (L/tonne) | 5.3 | 7.7 |
| Antisettling agent (BWOB) | 0.6 | 0.6 |
| Polyglycol antifoam agent (L/tonne) | 2.6 | 2.6 |
| Linear PVOH (4%) (L/tonne) | 0.0 | 114.2 |
| Tap water (L/tonne) | 491.6 | 375.1 |

The rheological and fluid loss measurements are given in Table 4.

**Table 4. Rheological and fluid loss measurements of 1198 kg/m³ slurries.**

| **Example** | **Test number** | **6** | **7** |
|---|---|---|---|
| 2A | Plastic viscosity (mPa.s) | 128 | 129 |
| 2B | Yield Value (Pa) | 3.8 | 3.1 |
| 2C | API Fluid-loss (mL) | 344 | 20 |

Like Example 1, the results show the beneficial fluid loss control effect of adding linear PVOH. Test 6 is comparative.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims.

## Claims

1. A composition, comprising:
(i) water;
(ii) portland cement;
(iii) a linear polyvinylalcohol ; and
(iv) a crosslinked polyvinylalcohol;
said composition further comprising borosilicate glass microspheres.

2. The composition of claim 1, wherein the linear polyvinylalcohol has a molecular weight between 30,000 g/mol and 200,000 g/mol.

3. The composition of any one of claims 1-2, wherein the linear polyvinylalcohol is present at a concentration between 1 kg/tonne and 6 kg/tonne.

4. The composition of any one of claims 1-3, wherein the linear polyvinylalcohol has a degree of hydrolysis between 86 % and 90%.

5. The composition of any one of claims 1-4, wherein the crosslinked polyvinylalcohol is present at a concentration between 1 kg/tonne and 6 kg/tonne.

6. the composition of any one of claims 1-5, wherein the crosslinked polyvinylalcohol has a degree of hydrolysis between 86% and 90%.

7. A method for cementing a subterranean well, comprising:
(i) preparing a cement slurry comprising water, Portland cement, a linear polyvinylalcohol, a crosslinked polyvinylalcohol, said slurry further comprising borosilicate glass microspheres, and the linear polyvinylalcohol is crosslinked by boron in the slurry; and
(ii) placing the slurry into the well.

8. The method of claim 7, wherein the linear polyvinylalcohol has a molecular weight between 30,000 g/mol and 200,000 g/mol.

9. The method of any one of claims 7-8, wherein the linear polyvinylalcohol is present at a concentration between 1 kg/tonne and 6 kg/tonne.

10. The method of any one of claims 7-9, wherein the linear polyvinylalcohol has a degree of hydrolysis between 86% and 90%.

11. The method of any one of claims 7-10, wherein the crosslinked polyvinylalcohol is present at a concentration between 1 kg/tonne and 6 kg/tonne.

12. The method of any one of claims 7-11, wherein the crosslinked polyvinylalcohol has a degree of hydrolysis between 86% and 90%.

13. The method of any one of claims 7-12, wherein the method is a primary cementing operation or a remedial cementing operation.

## Patentansprüche

1. Zusammensetzung, umfassend:
(i) Wasser;
(ii) Portlandzement;
(iii) einen linearen Polyvinylalkohol; und
(iv) einen vernetzten Polyvinylalkohol;
wobei die Zusammensetzung ferner Borosilikatglas-Mikrokugeln umfasst.

2. Zusammensetzung nach Anspruch 1, wobei der lineare Polyvinylalkohol ein Molekulargewicht zwischen 30.000 g/mol und 200.000 g/mol aufweist.

3. Zusammensetzung nach einem der Ansprüche 1-2, wobei der lineare Polyvinylalkohol in einer Konzentration zwischen 1 kg/t und 6 kg/t vorliegt.

4. Zusammensetzung nach einem der Ansprüche 1-3, wobei der lineare Polyvinylalkohol einen Hydrolysegrad zwischen 86 % und 90 % aufweist.

5. Zusammensetzung nach einem der Ansprüche 1-4, wobei der vernetzte Polyvinylalkohol in einer Konzentration zwischen 1 kg/t und 6 kg/t vorliegt.

6. Zusammensetzung nach einem der Ansprüche 1-5, wobei der vernetzte Polyvinylalkohol einen Hydrolysegrad zwischen 86 % und 90 % aufweist.

7. Verfahren zur Zementierung einer unterirdischen Bohrung, umfassend:
(i) Zubereiten einer Zementmilch, die Wasser, Portlandzement, einen linearen Polyvinylalkohol, einen vernetzten Polyvinylalkohol umfasst, wobei die Zementmilch ferner Borosilikatglas-Mikrokugeln umfasst und der lineare Polyvinylalkohol durch Bor in der Zementmilch vernetzt wird; und
(ii) Einbringen der Zementmilch in die Bohrung.

8. Verfahren nach Anspruch 7, wobei der lineare Polyvinylalkohol ein Molekulargewicht zwischen 30.000 g/mol und 200.000 g/mol aufweist.

9. Verfahren nach einem der Ansprüche 7-8, wobei der lineare Polyvinylalkohol in einer Konzentration zwischen 1 kg/t und 6 kg/t vorliegt.

10. Verfahren nach einem der Ansprüche 7-9, wobei der lineare Polyvinylalkohol einen Hydrolysegrad zwischen 86 % und 90 % aufweist.

11. Verfahren nach einem der Ansprüche 7-10, wobei der vernetzte Polyvinylalkohol in einer Konzentration zwischen 1 kg/t und 6 kg/t vorliegt.

12. Verfahren nach einem der Ansprüche 7-11, wobei der vernetzte Polyvinylalkohol einen Hydrolysegrad zwischen 86 % und 90 % aufweist.

13. Verfahren nach einem der Ansprüche 7-12, wobei das Verfahren ein Primärauszementierungsvorgang oder ein Sanierungszementierungsvorgang ist.

## Revendications

1. Une composition, comprenant :
(i) eau ;
(ii) ciment portland ;
(iii) un polyalcool de vinyle linéaire ; et
(iv) un polyalcool de vinyle réticulé ;
ladite composition comprenant en outre des microsphères de verre au borosilicate.

2. La composition selon la revendication 1, dans laquelle le polyalcool de vinyle linéaire a un poids moléculaire compris entre 30 000 g/mol et 200 000 g/mol.

3. La composition selon l'une quelconque des revendications 1 à 2, dans laquelle le polyalcool de vinyle linéaire est présent à une concentration comprise entre 1 kg/tonne et 6 kg/tonne.

4. La composition selon l'une quelconque des revendications 1 à 3, dans laquelle le polyalcool de vinyle linéaire a un degré d'hydrolyse compris entre 86% et 90%.

5. La composition selon l'une quelconque des revendications 1 à 4, dans laquelle le polyalcool de vinyle réticulé est présent à une concentration comprise entre 1 kg/tonne et 6 kg/tonne.

6. La composition selon l'une quelconque des revendications 1 à 5, dans laquelle le polyalcool de vinyle réticulé a un degré d'hydrolyse compris entre 86% et 90%.

7. Un procédé de cimentation d'un puits souterrain, consistant à :
(i) préparer un coulis de ciment comprenant de l'eau, du ciment Portland, un polyalcool de vinyle linéaire, un polyalcool de vinyle réticulé, ledit coulis de ciment comprenant en outre des microsphères de verre au borosilicate,
et le polyalcool de vinyle est réticulé par le bore dans le coulis ; et
(ii)placer le coulis dans le puits.

8. Le procédé selon la revendication 7, dans laquelle le polyalcool de vinyle linéaire a un poids moléculaire compris entre 30 000 g/mol et 200 000 g/mol.

9. Le procédé selon l'une quelconque des revendications 7 à 8, dans lequel le polyalcool de vinyle linéaire est présent à une concentration comprise entre 1 kg/tonne et 6 kg/tonne.

10. Le procédé selon l'une quelconque des revendications 7 à 9, dans lequel le polyalcool de vinyle linéaire a un degré d'hydrolyse compris entre 86% et 90%.

11. Le procédé selon l'une quelconque des revendications 7 à 10, dans lequel le polyalcool de vinyle réticulé est présent à une concentration comprise entre 1 kg/tonne et 6 kg/tonne.

12. Le procédé selon l'une quelconque des revendications 7 à 11, dans lequel le polyalcool de vinyle réticulé a un degré d'hydrolyse compris entre 86% et 90%.

13. Le procédé selon l'une quelconque des revendications 7 à 12, dans lequel le procédé est une opération de cimentation primaire ou une opération de cimentation corrective.
